# EUROPEAN PATENT APPLICATION

(11) **EP 4 840 833 A1**
(43) Date of publication of application: **18.11.2026**
(21) Application number: 25176530.1
(22) Date of filing: 14.05.2025
(51) Int. Cl.: C03C 17/09, B33Y 10/00, B33Y 70/00, B33Y 80/00, C03B 19/06, H01J 25/34, H01J 23/24

(54) **USE OF AN ADDITIVE MANUFACTURING PROCESS TO PRODUCE A SLOW-WAVE-STRUCTURE (SWS), PROCESS TO PRODUCE A SWS AND VACUUM TUBE**

(71) Applicant: Wisconsin Alumni Research Foundation, Madison, WI 53726 (US); Universität Hamburg, 20148 Hamburg (DE)
(72) Inventor: Blick, Robert, 22761 Hamburg (DE); Zierold, Robert, 22761 Hamburg (DE); Lagally, Max, Madison, 53726 (US)
(74) Representative: Patentanwälte Olbricht Buchhold Keulertz

(57) **Abstract**

Method of manufacturing a slow-wave-structure (10) comprising the following steps: producing a green body (G), sintering the green body (G), coating the sintered body (SK), wherein the sintered body (SK) is made of glass and is coated with conductive material.

## Description

The invention relates to the use of an additive manufacturing process to produce a slow-wave-structure (SWS) according to claim 1, a process to produce a SWS according to claim 7, as well as a delay tube according to claim 36.

Vacuum tubes with SWS are known. For high-frequency applications, it is necessary to produce SWSs with suitable inductance. The general trend towards miniaturization also demands a downsizing of the SWS. However, the previously known methods are complex and not applicable to very small sizes.

It is therefore the purpose of this invention to describe the use of a technology and a method for manufacturing SWSs that can be applied on different scales and is flexible in determining the geometric parameters of the SWS.

Features according to the invention are indicated in claims 1, 7, and 36. Embodiments are the subject of the implementation forms and the sub-claims.

The invention relates to the use of an additive manufacturing process to produce a slow-wave-structure.

Additive processes are characterized by their extreme versatility and the ability to create structures that are not possible using classic subtractive techniques.

In a variant, the additive manufacturing process is a stereolithographic process.

In another variant, the stereolithographic process is a direct laser writing process.

In a particularly advantageous variant, the direct laser writing process is a multiphoton lithography process.

In one variant, the multiphoton lithography process is a two-photon lithography process.

Stereolithographic methods, in combination with multiphoton processes, allow for high spatial resolution and high throughput in manufacturing.

In a further embodiment, the use of an additive manufacturing process to coat a slow-wave-structure is proposed.

Furthermore, a method for manufacturing a slow-wave-structure is proposed, comprising the following steps:
▪ manufacturing a green body,
▪ sintering the green body,
▪ coating the sintered body, wherein the sintered body consists of glass and is coated with a conductive material.

In another version, it is also conceivable to use other materials for the sintered body, as long as they can be 3D printed.

In a given variant, the coating is carried out with copper or gold.

Both copper and gold have excellent electrical and thermal conductivity. Thus, even with thin layer thicknesses, a high electrical conductivity can be achieved, which on the one hand counteracts premature heating and on the other hand also effectively dissipates heat.

In one example embodiment, the coating is carried out by atomic layer deposition.

The coating is advantageously applied by atomic layer deposition because it offers unparalleled conformity and precise thickness control, which is particularly advantageous for complex three-dimensional geometries such as helices or spirals.

In another variant, the coating is applied by means of an electrodeposition process.

Typically, the coating is applied in several steps.

In one variant, a surface modification, in particular a seed layer, is applied first.

Applying the seed layer can be either done by using ALD or an electroless deposition method.

In another variant, the coating is applied in a second step, in particular by an electrodeposition process.

Galvanic processes, such as electrodeposition, can advantageously produce a suitable coating in particularly fast processes, especially if suitable seed layers or surface modifications are introduced to initiate the process. These alternatives not only increase processing flexibility but can also be crucial for scaling up production.

In a further embodiment, a layer thickness of at least 10 nm, advantageously at least 100 nm and particularly advantageously at least 1 µm or 10 µm or 100 µm, is applied.

In one variant, the green body consists of a polymer matrix which is created by polymerizing a resin.

Typically, the resin is polymerized by means of a laser, wherein the laser is operated in a pulsed manner and the pulse length is in the femtosecond range and the pulse repetition rate is in the MHz range.

In a further embodiment, the laser has a wavelength in the near infrared.

Typically, the laser is focused.

In a further variant, the laser is focused on a numerical aperture greater than or equal to 0.3.

In a particularly advantageous variant, polymerization takes place only at the focal point.

In one embodiment, the resin contains silicon dioxide nanoparticles.

The use of nanoparticles in the resin allows a green body to be created by polymerizing the same, which is essentially composed of nanoparticles and stabilized by a polymer matrix.

Advantageously, the refractive index of the resin at the laser wavelength used differs by less than 0.1 from that of silicon dioxide, advantageously by less than 0.01 and particularly advantageously by less than 0.001.

The use of a resin with nanoparticles having an approximately identical refractive index allows for a uniform irradiation of the resin without disruptive scattering effects by the nanoparticles or shading by already polymerized areas.

In one variant, polymerization occurs layer by layer or by moving the focus point through a 3D trajectory.

Typically, the non-polymerized resin is removed.

In one variant, the non-polymerized resin is removed by a bath in at least one solvent.

In a further embodiment, the at least one solvent is determined from a group comprising propylene glycol monomethyl ether acetate and isopropanol.

Advantageously, the non-polymerized resin is removed by successive baths in propylene glycol monomethyl ether acetate and isopropanol.

In a particularly advantageous variant, UV irradiation takes place during the bath in isopropanol.

During the polymerization of a resin, the cross-linking of the polymer chains varies depending on the process parameters, such as the writing speed or laser intensity. Flooding with UV light during development or washing away the non-polymerized resin has the advantage that incompletely polymerized components are not washed out of the body by the solvent but combine with other polymer chains. This reduces or prevents the shrinkage or distortion of the body during the development process.

In one variant, sintering occurs in two steps, whereby in a first step the polymer matrix is removed without residue and in a second step the silicon dioxide nanoparticles are sintered. Typically, the first step is preferably carried out in the range of 600°C and the second step is preferably carried out in the range of 1300°C.

Furthermore, the invention comprises a vacuum tube with an electromagnetic wave delay line, manufactured by a method according to the invention.

In an advantageous embodiment, the delay tube with a slow-wave-structure comprises a cathode that is designed and arranged to emit an electron beam, and an anode that is designed and arranged to act as an electron collector, wherein the electron beam emitted by the cathode is guided by the electromagnetic wave delay line.

In a particularly advantageous further embodiment, the electromagnetic wave delay line is arranged on a piezoelectric element which is designed and arranged to compress and/or stretch the electromagnetic wave delay line.

The arrangement of the SWS on a piezoelectric element allows it to be compressed and stretched, which is particularly advantageous for varying the performance parameters of the velocity-modulated tube. The inventive task of specifying a particularly flexible method for manufacturing SWS is particularly extended by this design, since a single SWS can fulfill different geometric requirements as a result.

In one variant, several electromagnetic wave delay lines are arranged one behind the other. Typically, the electromagnetic wave delay lines are arranged along the path of the electron beam in such a way that it passes through them.

In another variant, the electromagnetic wave delay lines have the same and/or different distances from one another.

In a further variant, the electromagnetic wave delay lines have the same geometric dimensions.

In a particularly advantageous variant, the electromagnetic wave delay line is essentially a spiral and/or helix.

In another version the spiral and/or helix is hollow. This allows the cooling of the SWS via a liquid or gaseous coolant which flows through the structure.

In another embodiment, the electromagnetic wave delay lines differ in one or more of their geometric dimensions, these being selected from the group consisting of inner diameter, outer diameter, arc length, number of turns, pitch, pitch angle, pitch number and length.

Further features, details and advantages of the invention are apparent from the wording of the claims and from the following description of examples of implementation based on the drawings. The following show:
- Fig. 1: a schematic representation of the process steps for producing a SWS;
- Fig. 2: a possible design of a delay line with a SWS according to the invention.

In the figures, identical or corresponding elements are designated by the same reference signs and are therefore not described again unless it is deemed necessary. Features that have already been described are not described again in order to avoid repetition and are applicable to all elements with identical or corresponding reference signs, unless explicitly excluded.

The disclosures contained in the entire description can be applied by analogy to identical parts with identical reference signs or identical component designations. The positional information chosen in the description, such as above, below, to the side, etc., also refers to the figures that are directly described and illustrated and, if the position changes, can be applied by analogy to the new position.

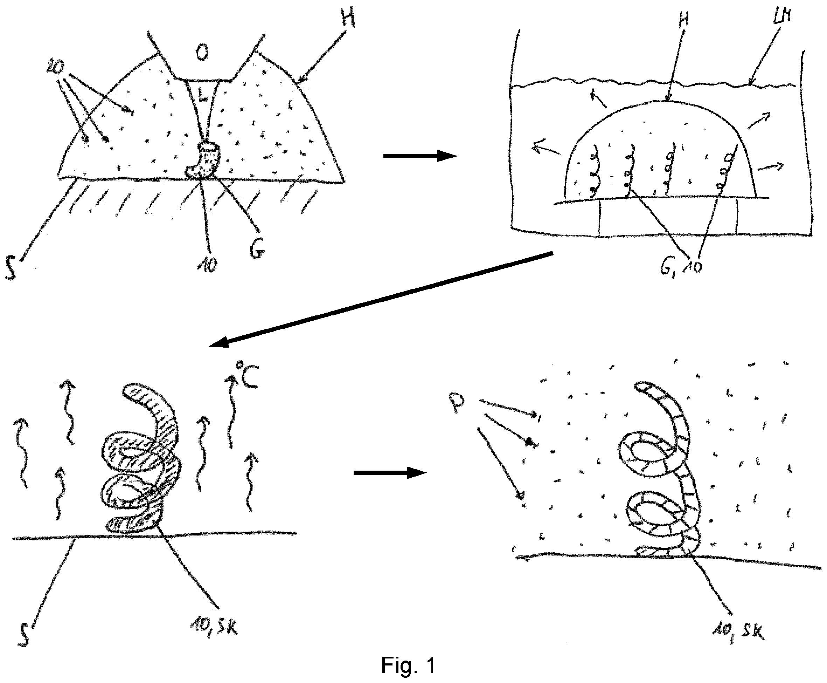

Fig. 1 shows the steps for manufacturing a slow-wave-structure according to the invention. The method comprises the following steps: production of a green body, sintering of the green body, coating of the sintered body. The sintered body consists of glass and is coated with conductive material.

The manufacturing method used is an additive manufacturing process, which is a two-photon lithography process.

First, a green body G, which consists of a polymer matrix, is created on a substrate S by polymerizing a resin H. The resin H is polymerized with a laser L which is focused by a lens O, whereby the resin H serves as its own immersion medium to focus the laser L.

The pulse length of the laser L is in the femtosecond range, the pulse repetition rate is in the MHz range and the laser L has a wavelength in the near infrared.

The focusing of the laser L is carried out with a numerical aperture greater than or equal to 0.3 and the polymerization takes place only at the focus.

The resin H contains silicon dioxide nanoparticles 20 which are incorporated in the polymerization of the green body G in this.

The refractive index of resin H differs by less than 0.1 from that of silicon dioxide at the laser wavelength used, advantageously by less than 0.01 and particularly advantageously by less than 0.001.

Polymerization is carried out layer by layer by scanning the focal point of the laser L in the plane, for example by means of a galvo system, or by moving the focal point along a 3D trajectory.

In a second step, non-polymerized resin H is removed by bathing in at least one solvent LM. The at least one solvent LM is chosen from a group comprising propylene glycol monomethyl ether acetate and isopropanol, with the non-polymerized resin being removed by successive baths in propylene glycol monomethyl ether acetate and isopropanol. During the isopropanol bath, UV irradiation can also be carried out.

In a third step, the green body G is sintered to form a sintered body SK in two steps. In the first step, the polymer matrix is removed without leaving any residue, and in a second step, the silicon dioxide nanoparticles 20 are sintered.

The first step is preferably carried out in the range around 600°C and the second step preferably in the range around 1300°C.

Finally, coating the SWS 10 with copper or gold is carried out. The coating is carried out by atomic layer deposition (ALD), whereby the precursors P are deposited on the sintered body SK.

Alternatively, the coating is applied by means of a galvanic process, whereby the coating is applied in several steps. First, a surface modification, particularly a seed layer, is applied, for example by ALD or electroless deposition, and in a second step the coating is applied, in particular by a galvanic process.

In both methods, a layer thickness of at least 10 nm, advantageously at least 100 nm and particularly advantageously at least 1 µm or 10 µm or 100 µm, is applied.

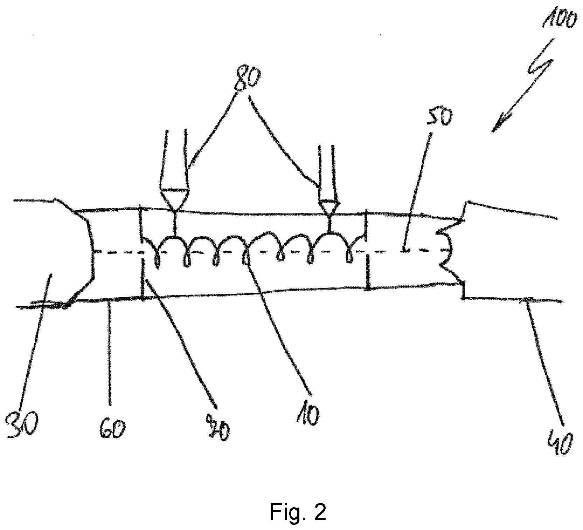

Fig. 2 shows a sketch of a velocity-modulated tube 100 with a slow-wave-structure 10 according to the invention.

The velocity-modulated tube 100 comprises a cathode 30, which is designed and set up to emit an electron beam 50, and an anode 40, which is designed and set up to act as an electron collector, the electron beam 50 emitted by the cathode 30 being guided by the electromagnetic wave delay line 10. In addition, the delay tube 100 has two high-frequency connections, 80 with which the signals to be processed are coupled in and out, respectively. The cathode 30 and anode 40, both protrude inside a glass tube 60 which contains a vacuum as well as the slow-wave-structure 10.

The electromagnetic wave delay line 10 is arranged on a piezoelectric element 70, which is designed and configured to compress and/or stretch the electromagnetic wave delay line 10 in order to change its properties.

Furthermore, individual features or combinations of features from the various design examples shown and described can also represent independent, inventive or inventive solutions.

The invention is not limited to one of the embodiments described above but can be modified in a variety of ways. All features and advantages arising from the claims, the description and the drawings, including design details, spatial arrangements and procedural steps, can be essential to the invention both individually and in a wide variety of combinations.

For the production of slow wave structures (SWS) whose geometric parameters can be defined flexibly and precisely, the invention proposes the use of an additive manufacturing process, wherein the additive manufacturing process is a direct laser writing process based on a two-photon lithography process. The additive manufacturing process is also used to coat the SWS.

The associated method according to the invention for manufacturing a slow wave structure (10) comprises the steps of producing a green body (G), sintering the green body (G), and coating the sintered body (SK), wherein the sintered body (SK) consists of glass and is coated with a conductive material. This method can be applied on different scales and is flexible in determining the geometric parameters of the SWS.

A vacuum tube 100 according to the invention has a slow-wave-structure 10 manufactured by a method described above, comprising a cathode 30 which is designed and arranged to emit an electron beam 50, and an anode 40 configured and arranged to act as an electron collector, wherein the electron beam 50 emitted from the cathode 30 is guided through the slow-wave-structure 10.

Such an invention-compliant traveling wave tube 100 with an electromagnetic wave delay line SWS, manufactured using the method described above, can be used as a vacuum electron device (VED), e.g. in components such as backward wave oscillators (RWOs or BWOs) and traveling wave tube amplifiers (e.g., TWTAs) operating in the THz range. The SWS structures enhance the interaction between the electron beam and the THz wave, resulting in efficient amplification or generation. Nonlinear transmission lines (NLTLs) can be designed using slow wave structures (SWS) to generate sharp electrical pulses that can be used to generate THz waves.

A key advantage of using an SWS is the extended interaction time between the wave and the electron beam, which enables efficient energy transfer. Certain SWSs also offer a wide bandwidth that is suitable for broadband THz applications.

Due to the reduced wave velocity, the solution according to the invention can be designed more compactly than conventional designs.

All combinations of at least two of the features disclosed in the description, claims and/or figures fall within the scope of the invention.

To avoid repetition, features disclosed as devices should also be considered as disclosed as methods and be claimable. Similarly, features disclosed as methods should be considered as disclosed as devices and be claimable.

### List of reference signs

- 10: Helix, SWS
- 20: Silicon dioxide nanoparticles
- 30: Cathode
- 40: Anode
- 50: Electron beam
- 60: Glass tube
- 70: Piezoelectric element
- 80: High-frequency connections
- 100: Vacuum tube

- G: Green body made of polymerized resin with nanoparticles
- H: Resin
- L: Laser
- LM: Solvent
- O: Lens
- P: Precursors for ALD/ ions for electrodeposition
- S: Substrate
- SK: Sintered body made of silicon dioxide

## Claims

1. Use of an additive manufacturing process to produce a slow-wave-structure (10), **characterized in that** it is a direct laser writing process based on a two-photon lithography process.

2. Use of an additive manufacturing process for coating a slow-wave-structure (10).

3. Method of manufacturing a slow-wave-structure (10) comprising the following steps:
▪ producing a green body (G),
▪ sintering the green body (G),
▪ coating the sintered body (SK),
**characterized in that** the sintered body (SK) is made of glass and is coated with conductive material.

4. The method according to claim 3, **characterized in that** the coating is carried out with copper or gold using atomic layer deposition and/or an electrodeposition process.

5. The method according to one of the claims 3 or 4, **characterized in that** the coating is carried out in several steps, wherein in a first step a seed layer is applied by atomic layer deposition or electroless deposition and in a second step the coating is applied by an electrodeposition process.

6. The method according to claim 3, **characterized in that** the green body (G) consists of a polymer matrix which is produced by polymerization of a resin (H), wherein the resin contains silica nanoparticles (20).

7. Vacuum tube (100) with a slow-wave-structure (10) manufactured by a method according to any one of claims 3 to 6, comprising
▪ a cathode (30) which is designed and arranged to emit an electron beam (50), and
▪ an anode (40) configured and arranged to act as an electron collector,
wherein the electron beam (50) emitted from the cathode (30) is guided through the slow-wave-structure (10).

8. Vacuum tube (100) according to claim 7, **characterized in that** the slow-wave-structure (10) is arranged on a piezoelectric element (70) which is designed and set up to compress and/or stretch the slow-wave-structure (10).

9. Vacuum tube (100) according to one of the claims 7 or 8, **characterized in that** several slow-wave-structures (10) are arranged one behind the other.

10. Vacuum tube (100) according to one of the claims 7 to 9, **characterized in that** the slow-wave-structures (10) are arranged along the path of the electron beam so that they are traversed by the latter.

11. Vacuum tube (100) according to one of the claims 7 to 10, **characterized in that** the slow-wave-structures (10) have the same and/or different distances from one another.

12. Vacuum tube (100) according to one of the claims 7 to 11, **characterized in that** the slow-wave-structures (10) have the same geometric dimensions.

13. Vacuum tube (100) according to any one of claims 7 to 12, **characterized in that** the slow-wave-structure (10) is essentially a spiral and/or helix.

14. Vacuum tube (100) according to claim 13, **characterized in that** the spiral and/or helix is hollow.

15. Vacuum tube (100) according to one of the claims 9, 13 or 14, **characterized in that** the slow-wave-structures (10) differ in one or more of their geometric dimensions, these being selected from the group comprising inner diameter, outer diameter, arc length, number of turns, pitch, pitch height, pitch angle and length.
